# FASCICULE DE BREVET EUROPEEN

(11) **EP 0 463 981 B1**
(45) Date de publication et mention de la délivrance du brevet: **20.09.1995**
(21) Numéro de dépôt: 91440051.0
(22) Date de dépôt: 21.06.1991
(51) Int. Cl.: B29C 67/20, B29C 44/00, B32B 5/06, B32B 5/20, B32B 27/40

(54) **Procédé de fabrication de matelassures en mousse de polyuréthane coulée in situ dans une coiffe en textile et coussin ainsi obtenu**
Verfahren zum Formen von Polyurethanschaumkissen mit einer Textilauskleidung und derart hergestellte Kissen
Method of manufacturing cushions from polyurethane foam moulded in-situ with a textile lining, and the cushion thus produced

(30) Priorité: 29.06.1990 FR 9008439
(43) Date de publication de la demande: 02.01.1992
(73) Titulaire: ROTH FRERES S.A., 67100 Strasbourg (FR)
(72) Inventeur: Roth, Jacques, F-67000 Strasbourg (FR); Manigold, Alain, F-67310 Romanswiller (FR); Schmitt, Daniel, F-67370 Truchtersheim (FR)
(74) Mandataire: Nuss, Pierre

(56) Documents cités:
- EP-A- 0 140 623
- EP-A- 0 141 556
- EP-A- 0 227 202
- EP-A- 0 376 671
- WO-A-85/04131
- DE-A- 3 728 923
- US-A- 3 258 511
- US-A- 4 287 143

## Description

La présente invention a pour objet un procédé de fabrication de matelassures en mousse de polyuréthane par coulée in situ du mélange moussant dans une coiffe en textile et un coussin obtenu par application de ce procédé.

Actuellement, on utilise principalement deux procédés différents pour couler un mélange moussant de polyuréthane dans une coiffe en textile préalablement disposée dans un moule.

Un premier procéde existant consiste à appliquer au préalable sur le textile une barrière étanche constituée par un film de caoutchouc, de polyuréthane ou d'une matière analogue, empêchant le mélange moussant de pénétrer et de passer à travers les mailles du textile.

En outre, le film étanche permet le maintien de la coiffe dans le moule par effet de succion. Mais le film n'est pas modifié structurellement lors du chauffage ultérieur visant à polymériser la mousse.

L'inconvénient majeur de ce procédé est donc que, du fait de l'étanchéification de la coiffe du coussin en textile par ce film, le confort climatique dudit coussin est bien évidemment largement compromis, notamment du fait de la transpiration de l'utilisateur.

Le second procédé utilisé consiste à appliquer sur le textile, en guise de barrière, une feuille de mousse souple de polyuréthane, découpée au préalable dans un bloc de ladite mousse.

Mais ce procédé ne donne satisfaction qu'à condition que cette feuille de mousse soit de caractère microcellulaire, c'est-à-dire très peu perméable à l'air grâce à des cellules peu ouvertes et peu communicantes. En effet, dans ce cas, le mélange moussant ne pénètre pas trop au travers des cellules de cette feuille de mousse, évitant ainsi en partie l'effet de durcissement, dit "effet carton", provoqué par densification du mélange moussant. Néanmoins, la perméabilité de la feuille de mousse est extrêmement difficile à maîtriser lors de la fabrication des blocs, de sorte qu'une grosse proportion de la fabrication est malgré tout défectueuse de par une trop grande perméabilité de la feuille de mousse, ce qui entraîne une pénétration trop importante du mélange moussant dans les cellules de la feuille de mousse microcellulaire, conduisant précisément, par densification du mélange moussant, à ce croûtage appelé "effet carton", désagréable pour l'utilisateur sur le plan du confort, et désastreux pour le fabricant sur le plan économique du fait du gaspillage d'une importante partie du mélange moussant inutilement perdue par densification et croûtage.

On peut également utiliser, à la place d'une feuille de mousse microcellulaire, une feuille de mousse souple préalablement feltisée à chaud. Mais les mêmes inconvénients subsistent avec une amplitude à peine atténuée.

En outre, le maintien de la coiffe en textile à l'intérieur du moule, obtenu, de manière idéale, en plaquant ladite coiffe sur la paroi interne du moule par un effet de succion, est rendu impossible dès lors que la barrière est constituée d'une feuille de mousse microcellulaire ou d'une feuille de mousse feltisée, toutes deux poreuses et donc perméables à l'air, rendant, par conséquent, l'effet de succion réalisé, par exemple, par la génération du vide, inopérant.

La présente invention a pour but de pallier les inconvénients précités et, plus précisément a pour objet l'obtention d'un coussin, coulé in situ dans une coiffe textile, bénéficiant, d'une part, des avantages de la technique du film étanche, à savoir aucun "effet carton", ni aucune perte de matière dûe au croûtage, par densification ainsi que la possibilité d'un positionnement et d'un maintien de la coiffe en textile dans le moule par un effet de succion, et, d'autre part, également des avantages de la technique de la barrière poreuse, à savoir une perméabilité à la vapeur d'eau aboutissant à un excellent confort climatique dudit coussin. Par ailleurs, la présente invention vise également à améliorer le moulage des matelassures de mousses de polyuréthane coulées in situ dans une coiffe en textile, en supprimant l'ouverture mécanique des cellules de la mousse après démoulage desdites matelassures.

A cet effet, la présente invention a pour objet un procédé de fabrication de matelassures en mousse de polyuréthane coulée in situ dans une coiffe en textile, caractérisé en ce qu'il consiste à disposer successivement dans un moule un textile doublé d'une feuille de mousse à cellules ouvertes et communicantes, puis un film de colle étanche, à plaquer par succion le complexe ainsi obtenu, destiné à constituer la coiffe du coussin, sur la paroi interne du moule, à couler ensuite dans ledit moule un mélange moussant de polyuréthane qui s'expanse et se gélifie après fermeture dudit moule, et, enfin, à réaliser une microperforation dudit film de colle étanche, par chauffage jusqu'au ramollissement et par effet de succion, lui conférant ainsi une bonne perméabilité à la vapeur d'eau et permettant également de générer, par l'effet de succion, une dépression dans la mousse en cours de gélification, provoquant l'éclatement de ses cellules, de telle manière que la matelassure de mousse résultante présente, après polymérisation et démoulage, des cellules constitutives ouvertes et communicantes.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
la figure 1 est une vue éclatée en perspective du complexe destiné à constituer la coiffe du coussin ;
la figure 2 est une vue analogue à celle de la figure 1 d'une variante de réalisation du complexe ;
la figure 3 (figures 3A, 3B et 3C) représente en des vues en élévation latérale et en coupe les principales étapes du procédé conforme à l'invention, et
la figure 4 est un diagramme des températures au niveau du complexe et des pressions dans la mousse, lors de la mise en oeuvre du procédé conforme à l'invention.

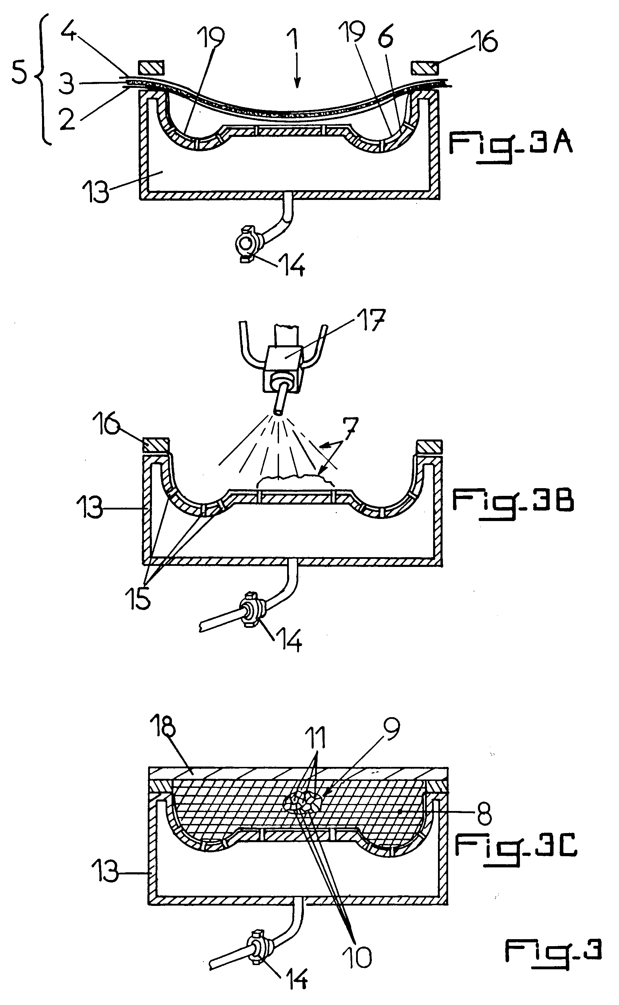

Conformément à l'invention, et comme le montrent les figures 3A, 3B et 3C, le procédé de fabrication de matelassures en mousse de polyuréthane consiste à disposer successivement dans un moule 1 un textile 2 doublé d'une feuille de mousse 3 à cellules ouvertes et communicantes, puis un film 4 étanche, à plaquer par succion le complexe 5 ainsi obtenu, destiné à constituer la coiffe du coussin, sur la paroi interne 6 du moule 1, à couler ensuite dans ledit moule 1 un mélange moussant de polyuréthane 7 qui s'expanse et se gélifie après fermeture dudit moule 1, et, enfin, à réaliser une microperforation dudit film 4 étanche lui conférant ainsi une bonne perméabilité à la vapeur d'eau et permettant également de générer, par l'effet de succion, une dépression dans la mousse 8 en cours de gélification, de telle manière que la matelassure de mousse 8 résultante présente, après polymérisation et démoulage, des cellules constitutives 11 ouvertes et communicantes.

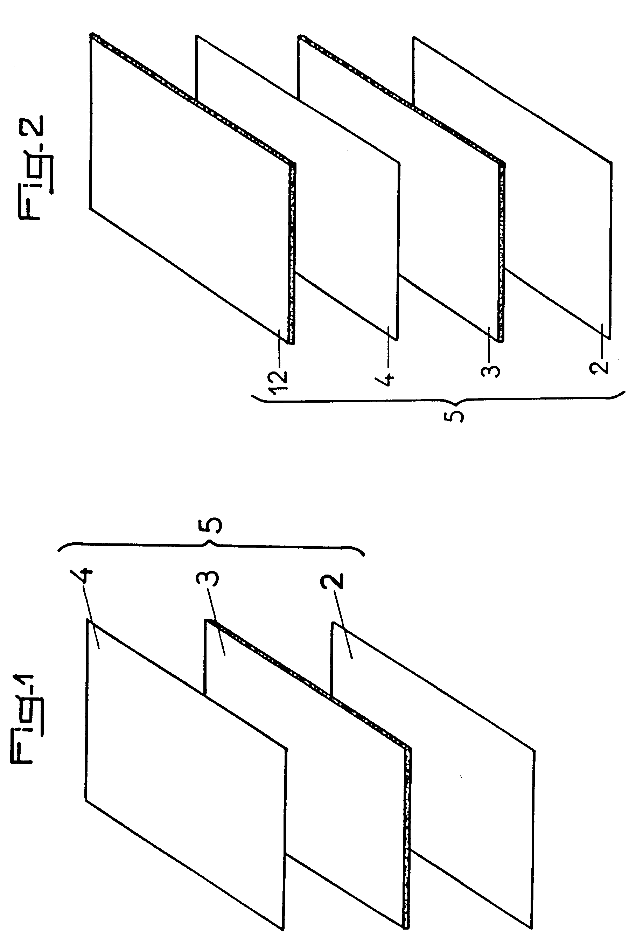

Selon une première caractéristique de l'invention représentée à la figure 1 des dessins annexés, le complexe 5 est composé, d'une part, d'un textile 2 tissé, tricoté ou non tissé, d'autre-part, d'une feuille de mousse de polyuréthane 3 à cellules ouvertes et communicantes, appliquée préalablement, par collage ou flammage, sur ledit textile 2 et, enfin, d'un film de colle 4 étanche, plaqué sur ladite feuille de mousse 3 par succion résultant d'une aspiration sous vide, cette dernière permettant également d'appliquer intimement ledit complexe 5 sur la paroi interne 6 du moule 1 et de verrouiller ainsi son positionnement dans ledit moule 1, notamment lors de la coulée.

Conformément à une caractéristique de l'invention, la microperforation du film de colle 4 étanche est obtenue, après expansion complète de la mousse 8 de polyuréthane dans le moule 1, par les effets concomitants, d'une part, d'un chauffage du complexe 5 jusqu'au ramollissement dudit film de colle 4 et, d'autre part, de l'aspiration sous vide au niveau de la paroi interne 6 du moule 1, entraînant la pénétration par succion dudit film de colle 4 ramolli dans les cellules de surface de la feuille de mousse 3 et, par conséquent, l'obtention d'allongements ponctuels importants dudit film de colle 4, aboutissant à des microruptures dans ce dernier et permettant de réaliser également une solidarisation par thermoscellage dudit film de colle 4 avec ladite feuille de mousse 3.

En effet, dès que le film de colle 4 s'est ramolli, il tend, du fait de l'aspiration sous vide, à pénétrer par succion à l'intérieur des cellules de surface de la feuille de mousse de polyuréthane 3 sur laquelle il est plaqué. Ce phénomène de succion provoque aux endroits des petites cavités que constituent ces cellules de surface, d'importants allongements ponctuels du film de colle 4, aboutissant à des microruptures ou à des affaiblissements localisés dudit film de colle 4 en ces points. Ainsi, le film de colle 4 est microperforé et devient microporeux et donc également perméable, notamment à la vapeur d'eau. En outre, il se trouve solidarisé par thermoscellage à la feuille de mousse de polyuréthane 3.

L'instant de démarrage du chauffage du complexe 5 coïncide avec la fin de l'expansion de la mousse 8 dans le moule 1, le temps d'expansion de ladite mousse 8 étant connu de manière précise eu égard à la formulation chimique du mélange moussant 7 initial.

Ce dernier peut être choisi indifféremment dans la panoplie des formulations connues, telles que, par exemple, les mousses à base d'isocyanate de type MDI ou de type TDI.

Selon une autre caractéristique de l'invention, la mousse 8 expansée et en cours de gélification, se trouve soumise, par suite de la microperforation du film de colle 4 initialement étanche, à une dépression générée, par l'aspiration sous vide, à l'intérieur de sa masse cellulaire 9, entraînant l'éclatement des parois 10 les plus minces des cellules 11 qui la constituent, et l'obtention, après polymérisation, d'une matelassure de mousse 8 constituée par des cellules 11 ouvertes et communicantes.

C'est précisément parce que la mousse 8 est encore en cours de gélification, donc encore fragile, que la dépression ainsi créée à l'intérieur de sa masse cellulaire 9 provoque l'éclatement de ses cellules 11.

Conformément à un mode de réalisation préféré de l'invention, la feuille de mousse de polyuréthane 3 à cellules ouvertes et communicantes présente une épaisseur comprise entre 1 et 3 millimètres et une densité de 20 à 50 gr/dm³, préférentiellement de 25 à 35gr/dm³. De même, le film de colle 4 étanche est avantageusement à base de polyuréthane et présente une température de ramollissement comprise entre 60 et 80°C ainsi qu'une épaisseur comprise entre 30 microns et 60 microns.

Un tel film de colle 4 existe, d'une part, sous la dénomination Platilon de la société Atochem et, d'autre part, sous la dénomination Puro de la société Guttacolle. Néanmoins, il est également possible, dans le cadre de l'invention, de mettre en oeuvre des films de colle 4 à base de polyamides, de copolymères ou de matériaux analogues, sans modifier le déroulement du procédé objet de l'invention. En outre, le complexe 5 pourra également, avant sa mise en place dans le moule 1, être entièrement préfabriqué, c'est-à-dire déjà incorporer le film de colle 4.

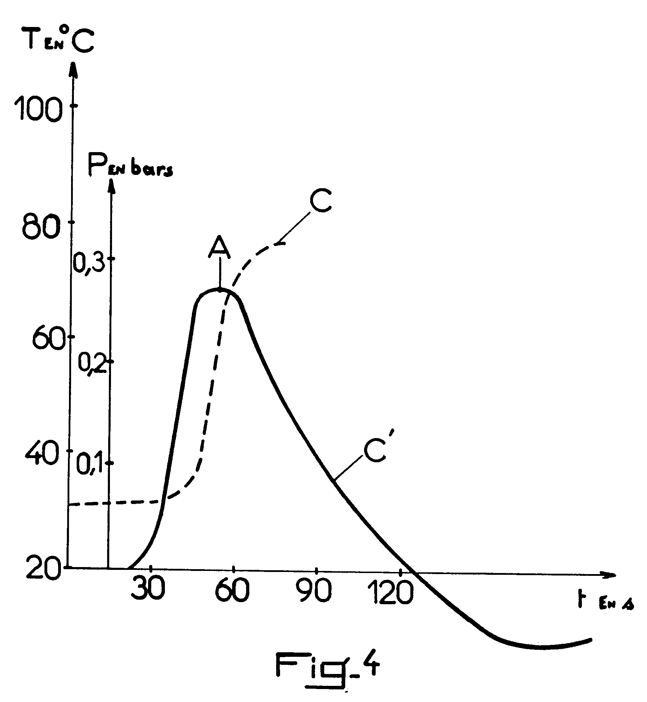

Comme le montre la figure 4 des dessins annexés, il est possible de suivre, moyennant la mise en place de sondes adéquates dans le moule 1, l'évolution de la température T (courbe C) au niveau du complexe 5 et son incidence sur l'évolution de la pression P (courbe C′) des gaz à l'intérieur de la masse cellulaire 9 de la mousse 8. L'instant précis de l'avènement de la microperforation du film de colle 4 peut ainsi être déterminé. En effet, il s'agit de l'instant, repéré sur la courbe C' par le point A, où la pression P dans la mousse amorce une chute rapide. Ainsi, comme représenté à la figure 4 des dessins annexés, les opérations de montée en température du complexe 5, de ramollissement du film de colle 4 et de microperforation de ce dernier ont une durée totale d'environ 40 secondes.

Selon une variante de réalisation de l'invention, représentée à la figure 2 des dessins annexés, le complexe 5 comporte une feuille de mousse de polyuréthane 12 supplémentaire disposée sur le film de colle 4 étanche et constituant une barrière cellulaire entre ledit film 4 et le mélange moussant 7 lors de son expansion et de sa gélification.

Ainsi, la présence de la feuille de mousse de polyuréthane 12, avantageusement d'une épaisseur de 1 à 2 mm, permet d'éviter le renforcement dudit film de colle 4 par la peau de moulage formée par la mousse 8 lors de son expansion et de sa gélification. Il en résulte une microperforation améliorée dudit film de colle 4, entraînant une perméabilité à la vapeur d'eau augmentée de la surface de la matelassure de coussin résultant.

Conformément à un mode de mise en oeuvre préféré du procédé conforme à l'invention, représenté aux figures 3A, 3B et 3C des dessins annexés, l'aspiration sous vide est réalisée au moyen d'un caisson à vide 13 relié, par exemple, par l'intermédiaire d'une vanne 14, à un générateur de vide et communicant avec le moule 1 grâce à des perforations multiples 15 de faibles dimensions ménagées dans la paroi interne 6 de ce dernier. Le complexe 5 est également verrouillé de manière étanche par un cadre 16 recouvert, après injection du mélange moussant 7, par l'intermédiaire d'une tête 17 de machine à couler, dans le moule 1, par un couvercle 18. En outre, le chauffage du complexe 5, en vue de la microperforation du film étanche 4, est réalisé préférentiellement au moyen de circuits imprimés 19 intégrés à la paroi interne 6 du moule 1. Ces circuits imprimés 19 peuvent être également pourvus de perforations multiples permettant au vide de communiquer avec l'intérieur du moule 1. Néanmoins, d'autres types de systèmes de chauffage intégrés au moule 1 peuvent être envisagés tels que, par exemple, des systèmes basés sur la circulation de vapeur ou de fluide chaud dans la paroi du moule 1 ou encore des dispositions de résistances électriques autres que des circuits imprimés 19.

L'invention a également pour objet un coussin obtenu par l'application du procédé conforme à l'invention, et comportant, après démoulage, une matelassure de mousse 8 garnie de sa coiffe en textile et constituée de cellules 11 ouvertes et communicantes, ladite matelassure de mousse 8 étant perméable en surface à la vapeur d'eau et ne présentant aucun durcissement en surface dû notamment à une densification du mélange moussant 7 au niveau de la coiffe.

Ainsi, il en résulte que tout calandrage consécutif de ladite matelassure est inutile. Par ailleurs, la perméabilité de la surface de la matelassure est telle qu'elle autorise le passage de 1150 à 1250 g de vapeur d'eau par m² et par 24 heures (Méthode Renault n° 1435). L'adjonction d'une feuille de mousse 12 supplémentaire au complexe 5 avant moulage permet même d'atteindre 1350 g de vapeur d'eau par m² et par 24 heures. Le confort climatique d'un coussin réalisé conformément à l'invention est, par conséquent, remarquable.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de fabrication de matelassures en mousse de polyuréthane coulée in situ dans une coiffe en textile, caractérisé en ce qu'il consiste à disposer successivement dans un moule (1) un textile (2) doublé d'une feuille de mousse (3) à cellules ouvertes et communicantes, puis un film de colle (4) étanche, à plaquer par succion le complexe (5) ainsi obtenu, destiné à constituer la coiffe du coussin, sur la paroi interne (6) du moule (1), à couler ensuite dans ledit moule (1) un mélange moussant de polyuréthane (7) qui s'expanse et se gélifie après fermeture dudit moule (1), et, enfin, à réaliser une microperforation dudit film de colle (4) étanche, par chauffage jusqu'au ramollissement et par effet de succion, lui conférant ainsi une bonne perméabilité à la vapeur d'eau et permettant également de générer, par l'effet de succion, une dépression dans la mousse (8) en cours de gélification, provoquant l'éclatement de ses cellules (11), de telle manière que la matelassure de mousse (8) résultante présente, après polymérisation et démoulage, des cellules constitutives (11) ouvertes et communicantes.

2. Procédé selon la revendication 1, caractérisé en ce que le complexe (5) est composé, d'une part, d'un textile (2) tissé, tricoté ou non tissé, d'autre part, d'une feuille de mousse de polyuréthane (3) à cellules ouvertes et communicantes appliquée, préalablement, par collage ou flammage sur ledit textile (2) et, enfin, du film de colle (4) étanche, plaqué sur ladite feuille de mousse (3) par succion résultant d'une aspiration sous vide, cette dernière permettant également d'appliquer intimement ledit complexe (5) sur la paroi interne (6) du moule (1) et de verrouiller ainsi son positionnement dans ledit moule (1), notamment lors de la coulée.

3. Procédé selon l'une quelconque des revendications 1 et 2, caractérisé en ce que la microperforation du film de colle (4) étanche est obtenue, après expansion complète de la mousse (8) de polyuréthane dans le moule (1), par les effets concomitants, d'une part, d'un chauffage du complexe (5) jusqu'au ramollissement dudit film de colle (4) et, d'autre part, de l'aspiration sous vide au niveau de la paroi interne (6) du moule (1), entraînant la pénétration par succion dudit film de colle (4) ramolli dans les cellules de surface de la feuille de mousse (3) et, par conséquent, l'obtention d'allongements ponctuels importants dudit film de colle (4) aboutissant à des microruptures dans ce dernier et permettant de réaliser également une solidarisation par thermoscellage dudit film de colle (4) avec ladite feuille de mousse (3).

4. Procédé selon l'une quelconque des revendications 1 à 3, caractérisé en ce que la mousse (8) expansée et en cours de gélification, se trouve soumise, par suite de la microperforation du film de colle (4) initialement étanche, à une dépression générée, par l'aspiration sous vide, à l'intérieur de sa masse cellulaire (9), entraînant l'éclatement des parois (10) les plus minces des cellules (11) qui la constituent, et l'obtention, après polymérisation, d'une matelassure de mousse (8) constituée par des cellules (11) ouvertes et communicantes.

5. Procédé selon l'une quelconque des revendications 1 à 4, caractérisé en ce que la feuille de mousse (3) à cellules ouvertes et communicantes présente une épaisseur comprise entre 1 et 3 millimètres et une densité de 20 à 50 gr/dm³, préférentiellement de 25 à 35 gr/dm³.

6. Procédé selon l'une quelconque des revendications 1 à 5, caractérisé en ce que le film de colle (4) étanche est avantageusement à base de polyuréthane et présente une température de ramollissement comprise entre 60 et 80°C ainsi qu'une épaisseur comprise entre 30 microns et 60 microns.

7. Procédé selon l'une quelconque des revendications 2 à 6, caractérisé en ce que le complexe (5) comporte une feuille de mousse de polyuréthane (12) supplémentaire disposée sur le film de colle (4) étanche et constituant une barrière cellulaire entre ledit film (4) et le mélange moussant (7) lors de son expansion et de sa gélification.

8. Coussin obtenu par la mise en oeuvre du procédé selon l'une quelconque des revendications 1 à 7, caractérisé en ce qu'il comporte, après démoulage, une matelassure de mousse (8) garnie de sa coiffe en textile et constituée de cellules (11) ouvertes et communicantes, ladite matelassure de mousse (8) étant perméable en surface à la vapeur d'eau et ne présentant aucun durcissement en surface dû notamment à une densification du mélange moussant (7) au niveau de la coiffe.

## Claims

1. Method of manufacturing paddings from polyurethane foam moulded in-situ in a textile covering, characterised in that it involves successively arranging in a mould (1) a textile material (2) backed by a sheet of foam (3) having communicating open cells, then an impermeable film of adhesive (4), placing the complex (5) thus obtained and intended to constitute the covering of the cushion by suction on the internal wall (6) of the mould (1), then pouring into said mould (1) a foaming mixture of polyurethane (7) which expands and gels after closure of said mould (1) and, finally, producing microperforations in said impermeable film of adhesive (4) by heating until it softens and by the effect of suction, thus imparting to it good permeability to steam and also allowing a depression to be generated, by the effect of suction, in the gelling foam (8), causing its cells (11) to burst in such a way that the resultant foam padding (8) has communicating open constituent cells (11) after polymerisation and removal from the mould.

2. Process according to Claim 1, characterised in that the complex (5) is composed, on the one hand, of a woven, knitted or non-woven textile material (2) and, on the other hand, of a sheet of polyurethane foam (3) having communicating open cells which is previously applied by adhesion or localised discolouration to said textile material (2) and, finally, of the impermeable film of adhesive (4) placed on said sheet of foam (3) by suction resulting from aspiration under vacuum, this aspiration also allowing said complex (5) to be applied intimately to the internal wall (6) of the mould (1) and its position in the mould (1) thus to be locked, in particular during pouring.

3. Process according to any one of Claims 1 and 2, characterised in that the microperforation of the impermeable film of adhesive (4) is obtained, after complete expansion of the polyurethane foam (8) in the mould (1), by the concomitant effects, on the one hand, of heating of the complex (5) until said film of adhesive (4) softens and, on the other hand, of aspiration under vacuum in the region of the internal wall (6) of the mould (1) causing the penetration by suction of said softened film of adhesive (4) in the surface cells of the sheet of foam (3) and, consequently, the obtaining of significant localised elongations of said film of adhesive (4) ending with microruptures therein and also allowing connection of said film of adhesive (4) to said sheet of foam (3) by heat sealing.

4. Process according to any one of Claims 1 to 3, characterised in that the gelling expanded foam (8) is subjected, owing to the microperforation of the initially impermeable film of adhesive (4), to a depression generated, by aspiration under vacuum, inside its cellular mass (9), leading to the bursting of the thinnest walls (10) of the cells (11) constituting it and the obtaining, after polymerisation, of a foam padding (8) consisting of communicating open cells (11).

5. Process according to any one of Claims 1 to 4, characterised in that the sheet of foam (3) having communicating open cells has a thickness of between 1 and 3 millimetres and a density of 20 to 50 gr/dm³, preferably 25 to 35 gr/dm³.

6. Process according to any one of Claims 1 to 5, characterised in that the impermeable film of adhesive (4) is advantageously based on polyurethane and has a softening temperature of between 60 and 80° as well as a thickness of between 30 microns and 60 microns.

7. Process according to any one of Claims 2 to 6, characterised in that the complex (5) comprises an additional sheet of polyurethane foam (12) arranged on the impermeable film of adhesive (4) and constituting a cellular barrier between said film (4) and the foaming mixture (7) during the expansion and gelling thereof.

8. Cushion obtained by carrying out the process according to any one of Claims 1 to 7, characterised in that it comprises, after removal from the mould, a padding of foam (8) equipped with its textile covering and consisting of communicating open cells (11), said foam padding (8) being permeable to steam at the surface and having no hardening at the surface due, in particular, to densification of the foaming mixture (7) in the region of the covering.

## Patentansprüche

1. Verfahren zum Formen von Kissen aus Polyurethanschaum, der in situ in eine Textilauskleidung gegossen wird, **dadurch gekennzeichnet**, daß es daraus besteht, der Reihe nach ein mit einer Schaumstoffolie (3) mit offenen und in Verbindung stehenden Zellen verstärktes Textil (2) und danach eine undurchlässige Klebstoffolie (4) in einer Form (1) anzuordnen, den so erhaltenen Komplex (5), der die Auskleidung des Kissens bilden soll, durch Saugwirkung an die Innenwand (6) der Form (1) zu plattieren, danach eine schäumende Polyurethanmischung (7) in die Form (1) zu gießen, die sich nach dem Schließen der Form (1) ausdehnt und geliert, und schließlich eine Mikroperforierung der undurchlässigen Klebstoffolie (4) durch Erwärmen bis zum Erweichen und durch Saugwirkung zu erzielen, wodurch dieser somit eine gute Wasserdampf-Durchlässigkeit verliehen wird und durch die Saugwirkung auch die Erzeugung eines Unterdrucks in dem Schaum (8) während des Gelierens ermöglicht wird, wodurch die Zellen (11) aufspringen, so daß das erhaltene Schaumkissen (8) nach der Polymerisation und nach dem Herausnehmen aus der Form offene und miteinander in Verbindung stehende Grundzellen (11) aufweist.

2. Verfahren nach Anspruch 1, dadurch gekennzeichnet daß der Komplex (5) einerseits aus einem gewebten, gestrickten oder Faservlies-Textil (2) besteht und andererseits aus einer Polyurethanschaumstoffolie (3) mit offenen und in Verbindung stehenden Zellen, die zuvor an das Textil (2) geklebt oder geflammt wurde, und schließlich aus einer undurchlässigen Klebstoffolie (4), die auf die Schaumstoffolie (3) durch Saugwirkung plattiert wird, welche durch Ansaugen unter Vakuum erzielt wird, wobei letztgenannte auch ermöglicht, den Komplex (5) fest an der Innenwand (6) der Form (1) anzuordnen und somit seine Position in der Form (1) vor allem beim Gießen zu fixieren.

3. Verfahren nach einem der Ansprüche 1 und 2, dadurch gekennzeichnet, daß die Mikroperforierung der undurchlässigen Klebstoffolie (4) erhalten wird, nachdem sich der Polyurethanschaum (8) in der Form (1) durch die gleichzeitige Wirkung einer Erwärmung des Komplexes (5) bis zum Erweichen der Klebstoffolie (4) einerseits und durch das Ansaugen unter Vakuum in Höhe der Innenwand (6) der Form (1) andererseits, vollständig ausgedehnt hat, wodurch die erweichte Klebstoffolie (4) durch die Saugwirkung in die Oberflächenzellen der Schaumstoffolie (3) eindringt und folglich deutliche punktuelle Ausdehnungen der Klebstoffolie (4) erzielt werden, was zu Mikroeinrissen in letztgenannter führt und auch eine Verfestigung durch Heißsiegeln der Klebstoffolie (4) mit der Schaumstoffolie (3) ermöglicht.

4. Verfahren nach einem der Ansprüche 1 bis 3, dadurch gekennzeichnet, daß der ausgedehnte und gelierende Schaum (8) infolge der Mikroperforierung des anfangs undurchlässigen Klebstoffilms (4) einem Unterdruck ausgesetzt wird, der durch Ansaugen unter Vakuum im Inneren der Zellmasse (9) erzeugt wird, wodurch die Wände (10) der kleineren Zellen (11), welche diese bilden, aufspringen und nach der Polymerisation ein Schaumkissen (8), das aus den offenen und in Verbindung stehenden Zellen (11) besteht, erhalten wird.

5. Verfahren nach einem der Ansprüche 1 bis 4, dadurch gekennzeichnet, daß die Schaumstoffolie (3) mit offenen und in Verbindung stehenden Zellen eine Dicke zwischen 1 und 3 Millimeter und eine Dichte von 20 bis 50 g/dm³, vorzugsweise 25 bis 35 g/dm³, aufweist.

6. Verfahren nach einem der Ansprüche 1 bis 5, dadurch gekennzeichnet, daß die undurchlässige Klebstoffolie (4) vorzugsweise auf Polyurethan basiert und eine Erweichungstemperatur zwischen 60 und 80°C aufweist, sowie eine Dicke zwischen 30 Mikron und 60 Mikron.

7. Verfahren nach einem der Ansprüche 2 bis 6, dadurch gekennzeichnet, daß der Komplex (5) eine zusätzliche Polyurethanschaumstoffolie (12) umfaßt, die auf die undurchlässige Klebstoffolie (4) aufgebracht wird und eine Zellsperre zwischen der Folie (4) und der schäumenden Mischung (7) bei deren Ausdehnung und Gelierung bildet.

8. Kissen, das bei der Ausführung des Verfahrens nach einem der Ansprüche 1 bis 7 erhalten wird, dadurch gekennzeichnet, daß es nach dem Herausnehmen aus der Form ein Schaumkissen (8) umfaßt, das mit der Textilauskleidung versehen ist und aus offenen und in Verbindung stehenden Zellen (11) besteht, welches Schaumkissen (8) an der Oberfläche wasserdampfdurchlässig ist und keine Oberflächenaushärtung aufweist, die vor allem auf eine Verdichtung der schäumenden Mischung (7) in Höhe des Kissens zurückzuführen ist.
